# EUROPEAN PATENT APPLICATION

(11) **EP 4 733 522 A1**
(43) Date of publication of application: **29.04.2026**
(21) Application number: 25209805.8
(22) Date of filing: 20.10.2025
(51) Int. Cl.: E05B 55/00, E05C 1/10, E05B 17/20, E05B 47/00, A01K 1/00

(54) **LATCH AND CAGE COMPRISING THIS LATCH**

(30) Priority: 24.10.2024 IT 202400023733
(71) Applicant: Tecniplast S.p.A., 21020 Buguggiate (IT)
(72) Inventor: BERNARDINI, Pietro, 21020 Casciago (IT); CICERI, Fabio, 21020 Daverio (IT); RINALDI, Mattia, 21048 Solbiate Arno (IT); NAVA, Paolo, 21100 Varese (IT); RUSSELL BRITZ, William, Sheridan, WY 82801 (US)
(74) Representative: Pizzoli, Antonio Mario

(57) **Abstract**

A latch comprising a housing (1) and a first movable member (2) that can slide in the housing (1) along a first axis (A) and comprises a bolt (3) that protrudes from the housing (1) in an extended position of the bolt (3), wherein at least one second movable member (21) can slide in the housing (1) along a second axis (B) substantially perpendicular to the first axis (A), wherein the second movable member (21) comprises a tip (23) configured to penetrate at least one seat (24) of the first movable member (2) and block the movement of the bolt (3) along the first axis (A), wherein the second movable member (21) comprises a magnetic or ferromagnetic head (26) that is arranged in a position opposite to the tip (23) of the second movable member (21). This description also relates to a cage comprising this latch.

## Description

### Technical field

The present description concerns a latch, in particular a latch that can be used to automatically lock the door or, more generally, the movable walls to access a cage. The present description also concerns a cage comprising this latch.

### Background of the description

Known cages comprise a latch and at least one door that can be automatically locked by the bolt of this latch, as the bolt is pushed into the extended locking position by spring means that bias a movable member integral with the bolt. To open the cage door, a user can manually pull a control portion of the movable member, thus overcoming the force of the spring means, so as to move the latch from an extended position to a retracted position in a latch housing.

However, a highly dexterous animal, such as a monkey, can insert a hand between the cage bars and operate the latch. To prevent this, the latch housing may comprise a perimeter guard that, on the one hand (not always), prevents the animal from freeing the access door and escaping the cage, but on the other hand, makes operating the latch more difficult for the user. Alternatively, the bolt can be prevented from moving by a padlock that can only be removed by a user with the appropriate key, which adds additional cost and complexity.

### Summary of the description

The object of this description is therefore to provide a latch that solves these problems. This object is achieved with a latch and a cage, the main characteristics of which are specified in the attached claims, which are to be considered an integral part of this description.

Thanks to the particular locking system of the bolt, the latch according to the present description not only prevents an animal from operating it, as a specific tool is required, but is also easier to use than said known latch. Furthermore, the locking system of the bolt does not prevent the latch and therefore the associated door from automatically closing.

The latch according to the present description also comprises a particular housing and other components that offer numerous advantages in terms of simplicity of manufacture, production costs, reliability over time and safety in use compared to the known latches.

These advantages are improved when the latch comprises one or more technical and structural features specified in the dependent claims.

### Brief description of the drawings

Further advantages and features of the latch and cage according to the present description will become apparent to those skilled in the art from the following detailed description of some embodiments, to be considered non-limiting examples of the claims, with reference to the attached drawings in which:
- figure 1 is a first axonometric view of one embodiment of the latch in a locked position;
- figure 2 is a second axonometric view of the latch in figure 1;
- figure 3 is a side view of the latch of figure 1;
- figure 4 is a rear view of the latch of figure 1;
- figure 5 is a front view of the latch of figure 1;
- figure 6 is a sectioned axonometric view of the latch of figure 1;
- figure 7 is section VII-VII of figure 5;
- figure 8 is section VIII-VIII of figure 5;
- figure 9 is the latch of figure 8 in an unlocked position;
- figure 10 is an isometric view of one embodiment of the cage;
- figure 11 is detail XI of figure 10.

### Exemplary embodiments

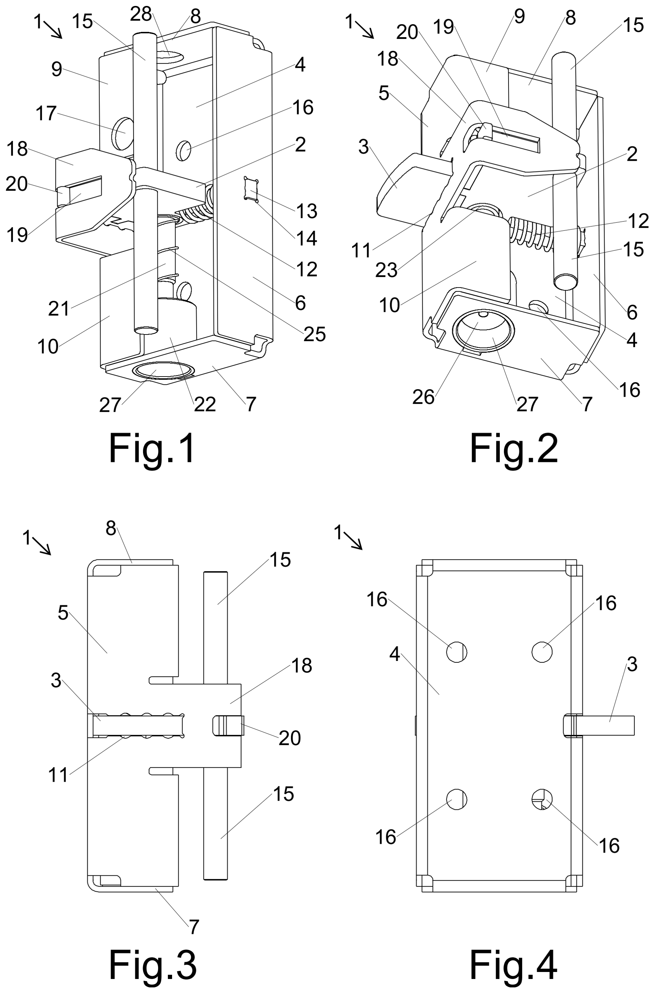

Figures 1-8 show an exemplary embodiment of the latch according to the present description, which comprises a housing 1 and a first movable member 2 that can slide in the housing 1 along a first axis A. The first movable member 2 comprises a bolt 3 that protrudes from the housing 1 in an extended position of the bolt 3. The first movable member 2 can be integral with the bolt 3, in particular embedded and welded as in the present embodiment or be made in one piece with the bolt 3.

The housing 1 comprises at least one support wall 4 and at least two main walls 5, 6 substantially parallel to each other and substantially perpendicular to the support wall 4. The housing 1 preferably also comprises one or more secondary walls 7, 8 substantially perpendicular to the support wall 4 and to the main walls 5, 6, and/or one or more cover walls 9, 10 substantially parallel to the support wall 4 and substantially perpendicular to the main walls 5, 6. In particular, the housing 1 has a substantially parallelepiped shape and comprises at least two secondary walls 7, 8 substantially parallel to each other. The first axis A is substantially parallel to the support wall 4 and/or substantially perpendicular to the main walls 5, 6. The main walls 5, 6 are preferably less extensive than the support wall 4 and more extensive than the secondary walls 7, 8. The cover walls 9, 10 may only partially enclose the housing 1, so that the interior of the housing 1 can be accessible from the outside.

The bolt 3 is slidably arranged in a first opening 11 in the first main wall 5 of the housing 1. The first opening 11 may have a substantially rectangular profile with the two longer sides having a wavy profile. Preferably, the cross-section of the bolt 3 is substantially rectangular.

The first movable member 2 is urged outward from the housing 1 by first elastic means 12 preferably arranged in the housing 1. In particular, the first elastic means 12 tends to expand between the first movable member 2 and the second main wall 6 to push the bolt 3 outward from the housing 1. The first movable member 2 comprises a bar 13 which is slidably arranged in a second opening 14 in the second main wall 6 of the housing 1. The first elastic means 12 preferably comprise a helical spring arranged around the bar 13 of the first movable member 2.

The first movable member 2 comprises at least one control portion 15, in particular a crosspiece inserted in a transverse hole of the first member 2, so that, if the latch is in an unlocked position, described below, a user can push or pull the control portion 15 of the first movable member 2 to move the bolt 3 towards the inside of the housing 1, overcoming the force of the first elastic means 12, and bring the bolt 3 from the extended position to a retracted position, in which the bolt 3 protrudes less or not at all from the housing 1. The control portion 15 may have a substantially cylindrical shape substantially perpendicular to the first axis A. The control portion 15 is preferably arranged outside the housing 1, i.e. at a distance from the support wall 4 that is greater than the distance between the support wall 4 and the cover walls 9, 10, or greater than the height of the main walls 5, 6.

The support wall 4 preferably comprises a plurality of holes 16, in particular four holes arranged at the four corners of a rectangle. A cover wall, in particular the first cover wall 9, may comprise at least one hole 17 that is aligned with a hole 16 of the support wall 4 and has a larger diameter than this hole 16.

The housing 1 preferably comprises a tongue 18 which protrudes from a main wall 5, 6 or from a secondary wall 7, 8, preferably from the first main wall 5. The tongue 18 comprises a slot 19 substantially parallel to the first axis A and a bent portion which comprises the slot 19 and is substantially parallel to the support wall 4. The first movable member 2 comprises a tooth 20 which can slide in the slot 19.

The support wall 4, the main walls 5, 6, the secondary walls 7, 8 and/or the cover walls 9, 10 preferably have a substantially rectangular shape.

The support wall 4, the main walls 5, 6, the secondary walls 7, 8, the cover walls 9, 10 and/or the tongue 18 are preferably made by shaping and bending portions of a single sheet of non-magnetic metal, in particular a stainless-steel sheet.

The latch comprises at least one second movable member 21 which can slide in the housing 1 along a second axis B substantially perpendicular to the first axis A. A portion of the second movable member 21 can be arranged in a slidable manner in a sleeve 22 integral with the housing 1, preferably fixed, in particular welded, in a third opening in the first secondary wall 7, so as to improve the reliability of the latch. The second movable member 21 comprises a tip 23 configured to penetrate at least one seat 24, in particular a single transverse hole, of the first movable member 2 and lock the movement of the bolt 3 along the first axis A. The second movable member 21 is urged towards the first movable member 2 by second elastic means 25 preferably arranged in the housing 1. In particular, the second elastic means 25 tend to expand between the tip 23 of the second movable member 21 and the sleeve 22 to urge the second movable member 21 towards the first movable member 2. The second movable member 21 preferably comprises a stem that can slide in the sleeve 22. The second elastic means 25 preferably comprise a helical spring arranged around the stem of the second movable member 21.

The second movable member 21 comprises a magnetic or ferromagnetic head 26, particularly a ferromagnetic head, more particularly made of iron or other metal that can be attracted by a magnet, which is slidably arranged in a cavity 27 of the sleeve 22 at a position opposite the tip 23 of the second movable member 21. The cavity 27 of the sleeve 22 is preferably open to the outside. The second secondary wall 8 preferably comprises a fourth opening 28 which is useful for facilitating the assembly of the second movable member 21 in the housing 1.

The stem of the second movable member 21, the sleeve 22, the tip 23 of the second movable member 21, the seat 24 of the first movable member 2, the magnetic or ferromagnetic head 26 , the cavity 27 of the sleeve 22 and/or the opening 28 of the second secondary wall 8 have a substantially cylindrical shape and/or are substantially coaxial with the second axis B. The tip 23 of the second movable member 21 preferably has a portion with a substantially frustoconical surface which faces the first movable member 2.

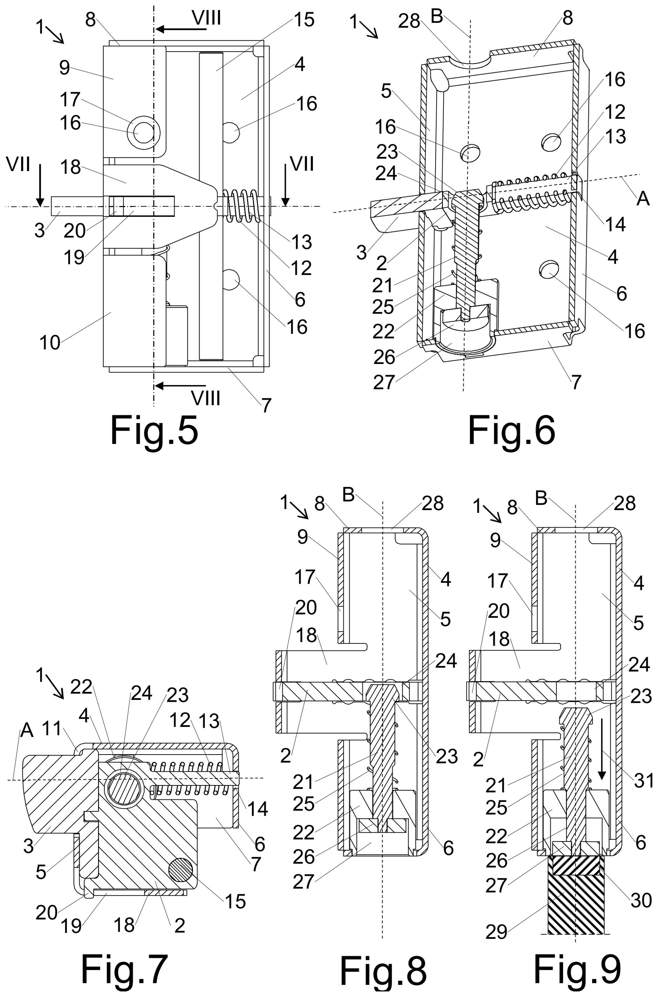

Figure 9 shows a tool 29 comprising a magnetic or ferromagnetic member 30, in particular a permanent magnet, which can be arranged by a user near the magnetic or ferromagnetic head 26 of the second movable member 21, so that the magnetic or ferromagnetic head 26 is attracted by the magnetic or ferromagnetic member 30 and the second movable member 21 moves towards the tool 29 in the direction of the arrow 31, thus overcoming the thrust of the second elastic means 25. With this movement of the second movable member 21, the tip 23 comes out of the seat 24 of the first movable member 2, which then passes from a locked position of the latch to an unlocked position in which the bolt 3 can be moved towards the housing 1. If the tool 29 is then moved away from the housing 1, the second elastic means 25 move the tip 23 of the second movable member 21 against a surface of the bolt 3 or of the first movable member 2, which is free to slide until the tip 23 returns to the seat 24 of the first movable member 2, so that the latch passes from the unlocked position to the locked position.

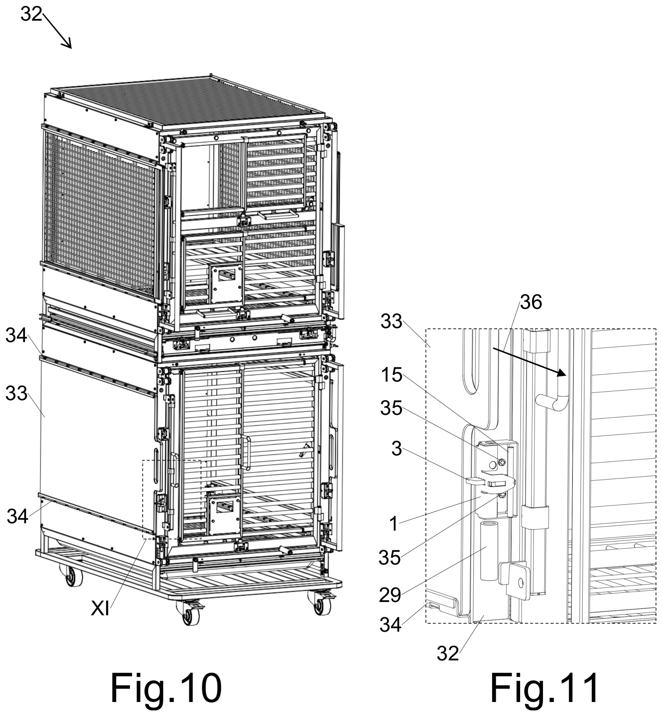

Figures 10 and 11 show a cage 32 comprising at least one latch according to the present description and at least one door 33 that can be locked by the bolt 3 of this latch. In particular, the door 33 of the cage 32, if the corresponding latch is unlocked, can slide along one or more guides 34 fixed to the cage 32 and/or can rotate around one or more hinges fixed to the cage 32. The housing 1 of the latch can be fixed to the cage 32 by means of screws 35 inserted into the holes 16 of the support wall 4 and screwed to a portion of the cage 32. The bolt 3 of the latch, in its extended position, interferes with a portion of the door 33, preventing its movement. To open the door 33, a user can bring the tool 29 close to the latch, thus unlocking the bolt 3, which can then be manually retracted into the housing 1, and consequently the door 33, which can then be moved in the direction of the arrow 36. To close the door 33, the user can simply move the door 33 in the direction opposite to the arrow 36, until the door 33 is closed and the bolt 3 no longer hits the door 33, whereby the bolt 3 automatically returns to its extended position by means of the first elastic means 12 and is automatically blocked by the second movable member 21 by means of the second elastic means 25 which urge the tip 23 into the housing 24.

Variations or additions may be made by those skilled in the art to the embodiments described and illustrated herein, while remaining within the scope of the following claims. In particular, further embodiments may comprise the technical features of one of the following claims with the addition of one or more technical features described in the text or illustrated in the drawings, taken individually or in any mutual combination, and comprising equivalent features thereof.

Furthermore, terms used in the text and/or drawings are intended to be inclusive unless otherwise specified, so for example the terms "a", "comprising", "including a", "having two", or "provided with" mean respectively "at least one", "comprising, but not limited to", "including at least one", "having two or more", or "provided with at least one".

## Claims

1. A latch comprising a housing (1) and a first movable member (2) which can slide in the housing (1) along a first axis (A), wherein the first movable member (2) comprises a bolt (3) which protrudes from the housing (1) in an extended position of the bolt (3), wherein the housing (1) comprises at least one support wall (4) and at least two main walls (5, 6) substantially parallel to each other and substantially perpendicular to the support wall (4), wherein the first axis (A) is substantially parallel to the support wall (4) and/or substantially perpendicular to the main walls (5, 6), wherein the bolt (3) is slidably arranged in a first opening (11) in the first main wall (5) of the housing (1), wherein the first movable member (2) is urged outward from the housing (1) by first elastic means (12), wherein the first movable member (2) comprises a bar (13) which is slidably arranged in a second opening (14) in the second main wall (6) of the housing (1), wherein the first movable member (2) comprises at least one control portion (15) to move the bolt (3) towards the inside of the housing (1), overcoming the force of the first elastic means (12), and bring the bolt (3) from the extended position to a retracted position in which the bolt (3) protrudes less or not at all from the housing (1), **characterised in that** the latch comprises at least one second movable member (21) which can slide in the housing (1) along a second axis (B) substantially perpendicular to the first axis (A), wherein the second movable member (21) comprises a tip (23) configured to penetrate at least one seat (24) of the first movable member (2) and block the movement of the bolt (3) along the first axis (A), wherein the second movable member (21) is urged towards the first movable member (2) by second elastic means (25), wherein the second movable member (21) comprises a magnetic or ferromagnetic head (26) which is arranged in a position opposite to the tip (23) of the second movable member (21).

2. The latch according to the preceding claim, wherein a portion of the second movable member (21) is arranged in a slidable manner in a sleeve (22) integral with the housing (1), wherein the magnetic or ferromagnetic head (26) of the second movable member (21) is arranged in a slidable manner in a cavity (27) of the sleeve (22).

3. The latch according to the preceding claim, wherein the second elastic means (25) tend to expand between the tip (23) of the second movable member (21) and the sleeve (22) to push the second movable member (21) towards the first movable member (2).

4. The latch according to the preceding claim, wherein the second movable member (21) comprises a stem which can slide in the sleeve (22), wherein the second elastic means (25) comprise a helical spring arranged around the stem of the second movable member (21).

5. The latch according to one of claims 2 to 4, wherein the housing (1) comprises one or more secondary walls (7, 8) substantially perpendicular to the support wall (4) and to the main walls (5, 6), wherein the sleeve (22) is fixed in a third opening in the first secondary wall (7).

6. The latch according to one of the preceding claims, wherein the stem of the second movable member (21), the sleeve (22), the tip (23) of the second movable member (21), the seat (24) of the first movable member (2), the magnetic or ferromagnetic head (26), and/or the cavity (27) of the sleeve (22) have a substantially cylindrical shape and/or are substantially coaxial with the second axis (B).

7. The latch according to one of the preceding claims, wherein the housing (1) comprises one or more cover walls (9, 10) substantially parallel to the support wall (4) and substantially perpendicular to the main walls (5, 6).

8. The latch according to one of the preceding claims, wherein the control portion (15) of the first movable member (2) is arranged outside the housing (1).

9. The latch according to one of the preceding claims, wherein the housing (1) comprises a tongue (18) protruding from a main wall (5, 6) or a secondary wall (7, 8) of the housing (1), wherein the tongue (18) comprises a slot (19) substantially parallel to the first axis (A) and a bent portion comprising the slot (19) and substantially parallel to the support wall (4), wherein the first movable member (2) comprises a tooth (20) which can slide in the slot (19).

10. The latch according to one of the preceding claims, wherein the support wall (4), the main walls (5, 6), the secondary walls (7, 8), the cover walls (9, 10), and/or the tongue (18) are made by shaping and bending portions of a single sheet of non-magnetic metal, in particular a sheet of stainless steel.

11. A cage (32) comprising at least one latch according to one of the preceding claims and at least one door (33) which can be automatically blocked by the bolt (3) of this latch.
